# EUROPEAN PATENT APPLICATION

(11) **EP 2 348 592 A2**
(43) Date of publication of application: **27.07.2011**
(21) Application number: 11151151.5
(22) Date of filing: 17.01.2011
(51) Int. Cl.: H02G 3/04

(54) **Holding apparatus**

(30) Priority: 21.01.2010 DE 202010001532 U
(71) Applicant: Newfrey LLC, Newark, Delaware 19711 (US)
(72) Inventor: Stigler, Mario, 35394 Giessen (DE); Hahn, Ernst-Ludwig, 35394 Giessen (DE)
(74) Representative: Witte, Weller & Partner

(57) **Abstract**

Apparatus (10) for holding at least one object (12), having a holding section (16) and a cover section (18) which is connected to the holding section (16) via a hinge (26), wherein a free end of the cover section (18) can be connected to the holding section (16) via a latching connection (28), and wherein the latching connection (28) has a latching opening (30) in which a latching tab (32) engages.

A securing lug (36) is arranged adjacent to the latching opening (30), can be deflected elastically for insertion of the latching tab (32) into the latching opening (30) and engages behind the latching tab (32), securing it, after its insertion into the latching opening (30). (Fig. 1)

## Description

The present invention relates to an apparatus for holding at least one object, in particular an elongated object, having a holding section and a cover section which is connected to the holding section via a hinge, wherein a free end of the cover section can be connected to the holding section via a latching connection, and wherein the latching connection has a latching opening in which a latching tab engages.

Holding apparatuses such as these are generally known, for example in the form of cable ducts, as are used in electrical installation technology or in automobile construction.

In this case, an elongated object, for example a cable or a cable run, is in general inserted into the holding section. In order to fix the object securely, the cover section is then closed, until the latching connection has latched in.

Particularly when used in mobile environments, it is disadvantageously possible for the latching connection to be released, for example because of vibration or the like.

The object of the invention is, in particular, to specify an improved holding apparatus, in particular with an improved and more secure latching connection.

In the case of the holding apparatus mentioned initially, this object is achieved in that a securing lug is arranged adjacent to the latching opening, can be deflected elastically for insertion of the latching tab into the latching opening and engages behind the latching tab, securing it, after its insertion into the latching opening.

This makes it possible to secure the latching connection such that it can no longer be released on its own. Furthermore, the securing function is preferably achieved virtually automatically when the cover section is closed and when the latching connection latches in. There is therefore no need for any further special working steps for securing the latching connection.

The object is therefore achieved completely.

According to one particularly preferred embodiment, the securing lug is formed integrally with that section of the holding section and the cover section on which the latching opening is formed.

In this embodiment, the holding apparatus can be produced at low cost.

In this case, it is particularly advantageous if the securing lug is formed by two incisions in that section of the holding section and cover section, wherein the incisions are connected to the latching opening.

The incisions may be formed in any desired manner, for example in a retrospective working step.

Particularly preferably, at least that section of the holding section and cover section on which the securing lug is formed is formed from plastic. In this case, it is preferable for the incisions to be manufactured in the same working step as the latching opening, for example in an injection-moulding step.

The connection of the incisions to the latching opening results in the securing lug being arranged in the immediate vicinity of the latching opening, wherein the free end of the securing lug may, in particular, form an edge of the latching opening. In this embodiment, because of the two incisions, the securing lug can be deflected with respect to the plane of that section, such that the latching opening is enlarged. This makes it possible to provide latching tabs with a cross section which is greater than the cross section of the latching opening when the securing lug is in the non-deflected state. As soon as the latching tab has been inserted into the latching opening, the securing lug can engage behind the latching tab in a securing manner, when it springs back elastically.

In this case, it may be advantageous for the cover section to be moved back again somewhat in the opposite direction to the closing direction, in order to allow the securing lug to spring back. It is particularly preferable for the latching tab to be formed such that it is automatically forced back against the closing direction by the resetting spring force of the securing lug.

According to one particularly preferred embodiment the incisions extend from the latching opening parallel to the closing direction of the cover section.

In this embodiment, the securing lug can in consequence be deflected in a direction transverse with respect to the closing direction, and in this way allows the latching tab to be inserted and to be secured with a simple design.

It is furthermore preferable when the incisions are aligned with two sides of the latching opening, which sides are opposite in a longitudinal direction.

In this embodiment, the incisions can be manufactured easily.

Overall, it is furthermore advantageous for the latching tab to have a depression in which a securing section engages when the securing lug engages behind the latching tab in a securing manner.

In particular, the depression makes it possible for the cover section to move back in the opposite direction to the closing direction after the insertion of the latching tab, in order to allow the securing lug to spring back. During this process, the securing section engages in the depression, as a result of which the latching tab is fixed in the lateral direction. The latching connection can subsequently be released only by deliberate manipulation of the securing lug. In consequence, the latching connection cannot be accidentally released.

It is particularly advantageous in this case for the securing section to be formed by an edge of the latching opening.

This allows the holding apparatus still to have a simple design.

Furthermore, in this case, it is advantageous for the securing section edge to be opposite that latching opening edge which is formed by the securing lug.

This also allows a simple design.

In this embodiment, only one essentially U-shaped cutout need be provided in the section of the holding section and covering section on which the latching opening is formed, the base of which cutout forms the latching opening, while its U-legs form the incisions.

In general, it is possible for the latching opening to be formed on the cover section.

However, it is preferable for the latching opening to be formed on the holding section. This makes it possible to simplify the design of the cover, which is then less sensitive to external forces when in the open state.

Overall, it is furthermore preferable for the holding section to have a U-shaped cross section, wherein the cover section is connected via the hinge to one of the U-limbs, and wherein the latching connection is provided in the area of the other U-limb.

Holding apparatuses such as these are particularly suitable for use as cable ducts or the like.

In general, it is possible for the cover section to deform elastically when it is being closed, until the latching tab engages in the latching opening.

However, it is particularly advantageous if the U-limbs of the holding section can be placed elastically against one another in a bending direction.

This embodiment allows the cover section to be made essentially stiff. When the cover section is being closed, the U-limbs spread apart from one another elastically until the latching tab engages in the latching opening, preferably by means of the elastic restoring force of the spread-apart U-limbs.

Overall, it is furthermore advantageous for the holding section and the cover section to be formed integrally with one another, and to be connected to one another via a film hinge.

In this embodiment, the holding apparatus is preferably produced entirely from plastic and from one piece.

It is self-evident that the features mentioned above and those which are still to be explained in the following text can be used not only the respectively stated combination but also in other combinations or on their own, without departing from the scope of the present invention.

Exemplary embodiments of the invention will be explained in more detail in the following description, and are illustrated in the drawing, in which:
Figure 1 shows a schematic cross-sectional view of a first embodiment of a holding apparatus according to the invention;
Figure 2 shows a section view along the line II - II in Figure 1;
Figure 3 shows an illustration, comparable to Figure 1, of an alternative embodiment of a holding apparatus according to the invention;
Figure 4 shows a cross-sectional view of a further embodiment of a holding apparatus according to the invention, during the deflection of the securing lug;
Figure 5 shows a view comparable to Figure 4, in which the securing lug has engaged with the latching tab in a securing manner;
Figure 6 shows a perspective illustration of a further embodiment of a holding apparatus according to the invention, with cover section open; and
Figure 7 shows the holding apparatus as shown in Figure 6, with the cover section closed.

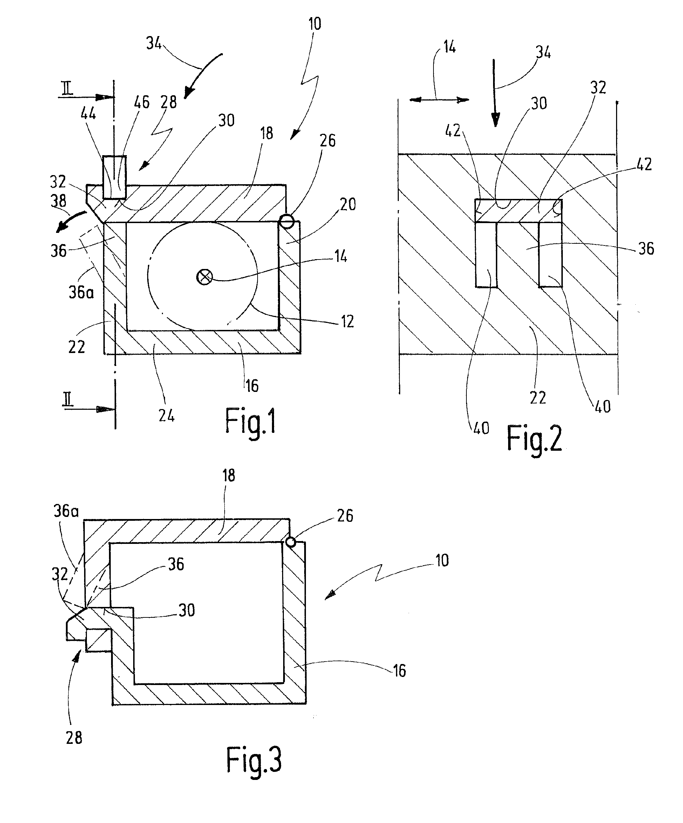

In Figure 1, a first embodiment of a holding apparatus according to the invention is annotated 10 in general. The holding apparatus 10 is used to hold an object 12, such as an elongated object which extends along a longitudinal direction 14. The elongated object may, for example, be a cable, a cable run, a flexible line, etc.

The holding apparatus 10 has a holding section 16 and a cover section 18. The holding section 16 has a U-shaped cross section and contains a first U-limb 20 and a second U-limb 22, which are connected to one another via a base 24. The holding section may extend over the entire length or over part of the length of the object 12. The cover section 18 may be shorter in the longitudinal direction than the holding section 16.

The cover section 18 is connected via a hinge 26 to the first U-limb 20, in particular to a free end thereof. Furthermore, the cover section 18 is connected in the closed state via a latching connection 28 to the second U-limb 22, in particular to a free end thereof.

The latching apparatus 28 contains a latching opening 30 which is formed in the second U-limb 22. Furthermore, the latching apparatus 28 contains a latching tab 32, which is formed on the cover section 18, in particular on a free end thereof.

Figure 1 schematically illustrates the closing direction of the cover section 18, at 34.

A securing lug 36 is formed on the holding section 18, to be more precise on the second U-limb 22, adjacent to the latching opening 30. The securing lug 36 can be deflected in a deflection direction as shown at 38, transversely with respect to the closing direction 34. When the cover section 18 is being closed, the securing lug 36 is deflected elastically by the latching tab 32, as is illustrated by a dashed line at 36a. After the latching connection 28 has latched in, the securing lug 36 springs back elastically to the position shown by solid lines and, in the process, engages behind the latching tab 32, in a securing manner.

The securing lug may be in the form of a separate component on the holding section 16. However, as is shown in Figure 2, the securing lug is preferably formed by incisions 40 in the second U-limb 22. The incisions 40 are connected to the latching opening 30 and extend parallel to the closing direction 34. In consequence, a free end of the securing lug 36 forms an edge of the latching opening 30. The incisions 40 are in this case aligned with two sides 42 of the latching opening 30, which sides 42 are opposite in the longitudinal direction.

The latching tab 32 is formed with a depression 44 on the side facing away from the securing lug 36. In this case, the latching connection 28 is designed such that the cover section 18 moves back in the opposite direction to the closing direction 34 once the latching tab 22 has been inserted into the latching opening 30. In the process, a securing section 46 engages in the depression 44. The securing section 46 is preferably formed by an upper edge of the latching opening 30, that is to say in consequence by a section of the second U-limb 22.

The securing lug 36 cannot spring back again into the initial position until the securing section 26 has engaged in the depression 24, in order then to engage behind the latching tab 32 in a securing manner. The cover section 18 is in this way fixed in the direction transversely with respect to the closing direction 34, and can no longer be opened accidentally.

Figure 3 shows a further embodiment of a holding apparatus 10 according to the invention. In terms of design and method of operation, this corresponds in general to the embodiment shown in Figures 1 and 2. The same elements are therefore denoted by the same reference symbols. Only the differences will be explained in the following text.

In the embodiment shown in Figure 3, the latching opening 30 and the securing lug 36 are formed at a second end of the cover section 18, and the latching tab 32 is formed on a limb of the holding section 16.

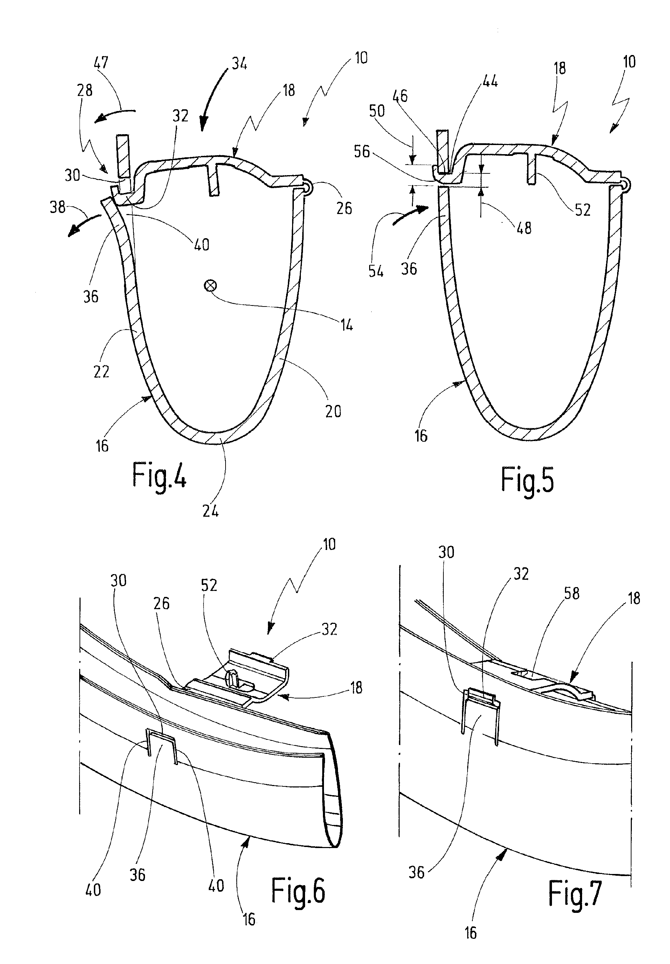

Figures 4 and 5 show a further embodiment of a holding apparatus according to the invention. In terms of design and method of operation, this corresponds in general to the embodiment shown in Figures 1 and 2. The same elements are therefore denoted by the same reference symbols. Only the differences will be explained in the following text.

As can be seen from Figure 4, the free end of the cover section 18 extends beyond the free end of the second U-limb 22 in the lateral direction. In order to insert the latching tab 32 into the latching opening 30, it is in consequence necessary as one alternative to elastically deform the cover section 18. Alternatively, the U-limbs 20, 22 can be bent elastically in a direction essentially parallel to the deflection direction 38, as is shown at 47. In this case, the cover section 18 is closed by the U-limbs 20, 22 first of all being bent open with respect to one another. The latching tab 32 then engages in the latching opening, with the securing lug 36 being elastically deflected, as is shown at 38. The bent-open U-limbs 20, 22 then also spring back. Once the securing section 46 has entered the depression 44, as is shown in Figure 5, the securing lug 36 springs back elastically and engages behind the latching tab 32 in a securing manner.

As can also be seen in Figure 5, the height of the latching opening 48 is less than the height of the latching tab 50. In consequence, it is impossible to insert the latching tab 32 without elastically bending the securing lug 36. The latching tab 32 cannot be inserted into the latching opening 30 until the securing lug 36 has been deflected.

A pressing section is shown at 52, which extends from a side of the cover section 18 facing the holding section 16. The pressing section 52 can be used to securely fix an object 12 which has been inserted into the holding section 16.

Figure 5 also shows that a lower face of the latching tab 32 can be provided with an incline 56. The incline makes it possible to push the cover section 18 back in the opposite direction to the closing direction 34 after the latching tab 32 has been inserted into the latching opening 30, to be precise by the elastic springing-back force of the securing lug 36.

Figures 6 and 7 show a further embodiment of a holding apparatus 10 according to the invention. In terms of design and method of operation, this corresponds in general to the holding apparatus shown in Figures 4 and 5. The same elements are therefore denoted by the same reference symbols. Essentially only the differences will be explained in the following text.

In this case, a release opening 58 is formed in the cover section 18. A tool can be pushed through the release opening 58 from the inside against the securing lug 36 in order in this way to release the latching connection 28. Alternatively, it is possible to release the latching connection 28 deliberately by pushing the securing lug 36 inwards in the opposite direction to the deflection direction 38, as is shown schematically at 54 in Figure 5.

## Claims

1. Apparatus (10) for holding at least one object (12), having a holding section (16) and a cover section (18) which is connected to the holding section (16) via a hinge (26), wherein a free end of the cover section (18) can be connected to the holding section (16) via a latching connection (28), and wherein the latching connection (28) has a latching opening (30) in which a latching tab (32) engages,
**characterized in that**
a securing lug (36) is arranged adjacent to the latching opening (30), can be deflected elastically for insertion of the latching tab (32) into the latching opening (30) and engages behind the latching tab (32), securing it, after its insertion into the latching opening (30).

2. Holding apparatus according to Claim 1, **characterized in that** the securing lug (36) is formed integrally with that section (16; 18) of the holding section (16) and the cover section (18) on which the latching opening (30) is formed.

3. Holding apparatus according to Claim 2, **characterized in that** the securing lug (36) is formed by two incisions (40) **in that** section (16; 18), wherein the incisions (40) are connected to the latching opening (30).

4. Holding apparatus according to Claim 3, **characterized in that** the incisions (40) extend from the latching opening (30) parallel to the closing direction (34) of the cover section (18).

5. Holding apparatus according to Claim 3 or 4, **characterized in that** the incisions (40) are aligned with two sides (42) of the latching opening (30), which sides (42) are opposite in a longitudinal direction (14).

6. Holding apparatus according to one of Claims 1 - 5, **characterized in that** the latching tab (32) has a depression (44) in which a securing section (46) engages when the securing lug (36) engages behind the latching tab (32) in a securing manner.

7. Holding apparatus according to Claim 6, **characterized in that** the securing section (46) is formed by an edge of the latching opening (30).

8. Holding apparatus according to Claim 7, **characterized in that** the securing section edge is opposite that latching opening edge which is formed by the securing lug (36).

9. Holding apparatus according to one of Claims 1 - 8, **characterized in that** the latching opening (30) is formed on the holding section (16).

10. Holding apparatus according to one of Claims 1 - 9, **characterized in that** the holding section (16) has a U-shaped cross section, wherein the cover section (18) is connected via the hinge (26) to a U-limb (20), and wherein the latching connection (28) is provided in the area of the other U-limb (22).

11. Holding apparatus according to Claim 10, wherein the U-limbs (20, 22) of the holding section (16) can be bent elastically with respect to one another in a bending direction (47).

12. Holding apparatus according to one of Claims 1 - 11, **characterized in that** the holding section (16) and the cover section (18) are formed integrally with one another, and are connected to one another via a film hinge (26).
